# EUROPÄISCHE PATENTSCHRIFT

(11) **EP 2 223 781 B1**
(45) Veröffentlichungstag und Bekanntmachung des Hinweises auf die Patenterteilung: **05.04.2017**
(21) Anmeldenummer: 10001086.7
(22) Anmeldetag: 03.02.2010
(51) Int. Cl.: B25F 5/02, A01G 3/053, B23D 51/00, B27B 17/08

(54) **Akkubetriebenes, handgeführtes Arbeitsgerät**
Battery-operated, hand-held work device
Appareil de travail portatif fonctionnant sur batterie

(30) Priorität: 27.02.2009 DE 102009012178
(43) Veröffentlichungstag der Anmeldung: 01.09.2010
(73) Patentinhaber: Andreas Stihl AG & Co. KG, 71336 Waiblingen (DE)
(72) Erfinder: Roßkamp, Heiko, Dr., 73099 Adelberg (DE); Mang, Harald, 71364 Winnenden (DE); Müller, Matthias, 73614 Schorndorf-Haubersbronn (DE); Reber, Volker, 74544 Michelbach (DE); Heinzelmann, Georg, 71522 Backnang (DE)
(74) Vertreter: Wasmuth, Rolf

(56) Entgegenhaltungen:
- WO-A1-90/13997
- DE-A1- 2 362 012
- DE-A1- 3 839 840
- DE-A1-102006 062 001
- DE-A1-102007 017 980
- JP-A- 2006 150 571
- US-A- 2 827 932
- US-A- 3 757 194
- US-A- 3 934 344
- US-A- 4 050 003
- US-A- 5 718 985
- US-A1- 2004 098 869
- US-B1- 6 536 536

## Beschreibung

Die Erfindung betrifft ein handgeführtes Arbeitsgerät, insbesondere ein tragbares, handgeführtes Arbeitsgerät wie eine Heckenschere, eine Motorkettensäge, einen Freischneider oder dgl. nach dem Oberbegriff des Anspruchs 1.

Aus der US 2007/0240892 A1 ist ein handgeführtes Arbeitsgerät in einer Ausbildung als eine Motorkettensäge bekannt, in dessen Gerätegehäuse ein elektrischer Antriebsmotor mit einem zugeordneten Abtrieb für ein Arbeitswerkzeug, nämlich eine Sägekette aufgenommen ist. Mit dem Gerätegehäuse ist ein Akkupack verbunden, der von außen an die Kontur des Gerätegehäuses angedockt wird. Über einen ersten, hinteren Handgriff mit einem Bedienelement wird das Arbeitsgerät geführt und der Antriebsmotor gesteuert, während ein zweiter, vorderer Handgriff durch die zweite Hand des Benutzers gegriffen wird, um das Arbeitsgerät zu halten.

Derartige Zweihandarbeitsgeräte sind in vielfältigen Ausführungen bekannt. Die Ausführung derartiger Geräte mit einem akkubetriebenen Elektromotor stellt eine besondere Heraus-forderung dar, da einerseits eine ausreichende Antriebsleistung zur Verfügung gestellt werden muss und andererseits eine ausreichende Betriebsdauer erforderlich ist. Die zur Verfügung zu stellende elektrische Energie erfordert daher entsprechend große und schwere Akkupacks, unabhängig davon, welche chemische Basis die Akkuzellen haben.

Derartige Akkupacks werden meist außen an das Gerätegehäuse angedockt, stehen also über die Kontur des Gerätegehäuses deutlich hervor. Je größer die gewünschte Maschinenleistung und die gewünschte Betriebsdauer sind, desto größer ist der Akkupack und desto mehr steht er über das Maschinengehäuse hinaus.

Aus der US 2004/098869 A1 ist eine Motorkettensäge bekannt, bei der ein Akkupack in einen hohlen hinteren Handgriff des Gerätegehäuses eingeschoben wird. Dies führt zu einer ungleichmäßigen Gewichtsverteilung, welche die Handhabung des Arbeitsgerätes erschwert.

Die DE 10 2007 017 980 A1 offenbart theoretische Gestaltungen von gattungsgemäßen Arbeitsgeräten mit einem Akkupack, ohne dass konkrete konstruktive Hinweise zur konstruktiven Gestaltung und zum Aufbau eines in der Praxis verwendbaren Arbeitsgerätes gegeben werden.

Der Erfindung liegt die Aufgabe zugrunde ein akkubetriebenes Arbeitsgerät derart auszubilden, dass bei ausreichender Leistung und Betriebsdauer ein Geräteaufbau möglich wird, der ein kompaktes Gerätegehäuse ohne hindernde Anbauten ermöglicht.

Die Aufgabe wird erfindungsgemäß nach den kennzeichnenden Merkmalen des Anspruchs 1 gelöst.

Der Akkupack ist erfindungsgemäß im Wesentlichen über seine gesamte Länge vollständig im Aufnahmeschacht des Gehäuses aufgenommen, wobei das Gerätegehäuse ein Gehäusevolumen und der Aufnahmeschacht ein im Gerätegehäuse liegendes Aufnahmevolumen aufweist. Die Gestaltung ist erfindungsgemäß so gewählt, dass das Verhältnis V des Gehäusevolumens zum Aufnahmevolumen im Bereich von etwa 1,5 bis maximal 2,5 liegt.

Dieses Volumenverhältnis stellt einerseits ein ausreichend großes Aufnahmevolumen für einen entsprechend dimensionierten Akkupack zur Verfügung und lässt andererseits im Gehäuse ausreichend Bauraum, um Gerätekomponenten wie Antriebsmotor, Abtrieb und dgl. platzsparend und zweckmäßig anzuordnen.

Das Volumenverhältnis V des Gehäusevolumens zum Aufnahmevolumen liegt zweckmäßig unter 2,5 , wodurch ein kompaktes, vielseitig einsetzbares Arbeitsgerät geschaffen ist.

Nicht nur die Abstimmung der Volumina ist von Bedeutung, sondern auch die Lage des Schwerpunktes des Akkus innerhalb des Gerätegehäuses. Die Höhenlage des Masseschwerpunktes ist so vorgesehen, dass die vom Boden des Arbeitsgerätes gemessene Gehäusehöhe und der Abstand des Masseschwerpunktes des Akkupacks von dem Boden in einem Verhältnis von etwa 1,5 bis 2,5 stehen, insbesondere etwa 1,8 ist. Es hat sich als zweckmäßig erwiesen, wenn in Draufsicht auf das Arbeitsgerät der Masseschwerpunkt des Akkupacks mit einem vorzugsweise geringen seitlichen Abstand zu einer Gerätelängsachse liegt.

Dabei ist der Antriebsmotor zweckmäßig etwa unterhalb des vorderen Handgriffs positioniert, wobei die Drehachse des Antriebsmotors quer zur Gerätelängsachse liegt und mit dieser insbesondere einen Winkel von 90° einschließt. Mit quer zur Gerätelängsachse ist eine horizontal liegende Drehachse des Antriebsmotors umfasst.

Zweckmäßig steht die von einem hinteren Handgriff zu einer vorderen Gerätestirnseite gemessene Gerätelänge des Arbeitsgerätes und der Abstand des Masseschwerpunktes des Akkupacks von dem hinteren Handgriff in einem Verhältnis von etwa 1,7 bis 2,8, insbesondere bei etwa 2.

Der Akkupack hat ein Volumen von etwa 500 cm³ bis 1.200 cm³, insbesondere etwa 1.100 cm³ und bietet so ausreichend Bauraum für eine Kombination von im Packgehäuse angeordneten Einzel-zellen, egal ob dies NiCd-Zellen (Nickel-Cadmium-Zellen), NiMh Zellen (Nickel-Metallhydrid-Zellen), Lilo-Zellen (Lithium-Ionen-Zellen), LiPo-Zellen (Lithium-Polymer-Zellen), LiFePo4-Zellen (Lithium-Eisen-Phosphat-Zellen), Lithium-Titanat-Zellen oder dgl. aufgebaute Zellen sind. Vorteilhaft liegt die Zellenspannung im Bereich von 2 Volt bis 5 Volt, vorzugsweise etwa 3,6 Volt bis 3,7 Volt, wobei durch die Anzahl der Zellen und deren Schaltung (Reihenschaltung, Parallelschaltung) Akkupackspannungen von 12 Volt bis 80 Volt, vorzugsweise 25 Volt bis 51 Volt bereitgestellt werden können. Vorteilhaft hat der Akkupack eine Leerlaufspannung von etwa 36 bis 48 V.

Das Gehäusevolumen umfasst das Aufnahmevolumen des Aufnahmeschachtes und insbesondere auch das Volumen eines hinteren Handgriffs, der zweckmäßig einteilig mit dem Gerätegehäuse ausgebildet ist und zum Gehäusevolumen zählt.

Der Akkupack hat eine etwa quaderförmige Geometrie und erstreckt sich in seiner Längsachse etwa über die gesamte Höhe des Gerätegehäuses. Der Akkupack ist zwischen dem hinteren und einem vorderen Handgriff des Arbeitsgerätes angeordnet, wobei die Längsachse des Aufnahmeschachtes für den Akkupack zweckmäßig mit der Gerätelängsachse einen Winkel von weniger als 90° einschließt. Vorteilhaft ist die Längsachse des Aufnahme-schachtes zur Vertikalen auf den Boden des Gerätegehäuses nach vorne oder hinten um einen Winkel im Bereich von etwa 2° bis 20° geneigt, insbesondere um 10° bis 15° geneigt.

Der Antriebsmotor und insbesondere auch der Abtrieb liegen im Bereich zwischen dem Aufnahmegehäuse bzw. dem darin angeordneten Akkupack und der vorderen Stirnseite des Gerätegehäuses.

Der Antriebsmotor kann ein Bürstenläufer wie ein DC-Motor sein, der über eine Steuerelektronik betrieben ist. In bevorzugter Ausgestaltung der Erfindung ist ein EC-Motor bzw. Brushless-Motor mit einem Außenläufer vorgesehen, der über eine angepasste Steuerelektronik betrieben ist. Die Steuerelektronik ist vorteilhaft im Bereich des vorderen Handgriffs im Gerätegehäuse angeordnet.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: eine schematische Darstellung auf eine von einem Benutzer gehaltene Motorkettensäge von oben,
- Fig. 2: in schematischer Seitenansicht die Motorkettensäge nach Fig. 1,
- Fig. 3: eine schematische Draufsicht auf die Motorkettensäge nach Fig. 1,
- Fig. 4: eine schematische Seitenansicht einer Heckenschere,
- Fig. 5: eine schematische Draufsicht auf eine Heckenschere nach Fig. 4.

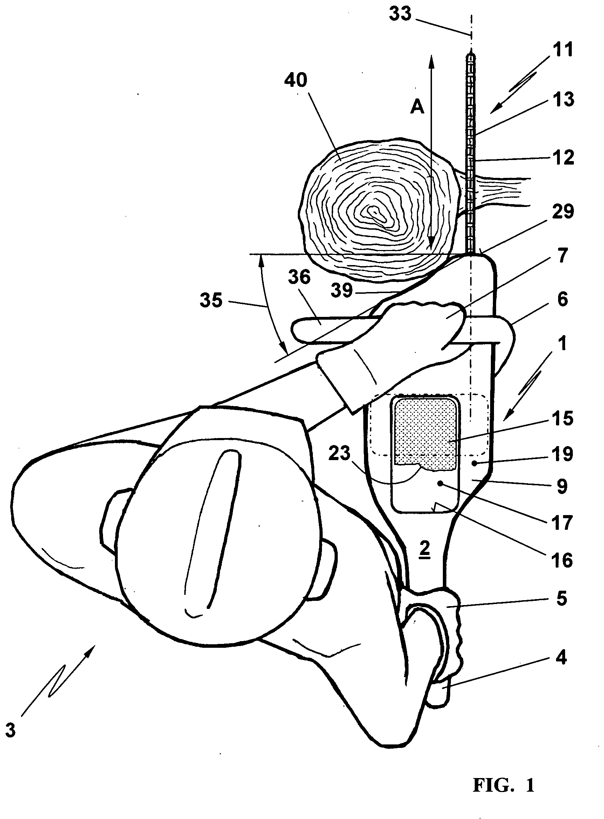

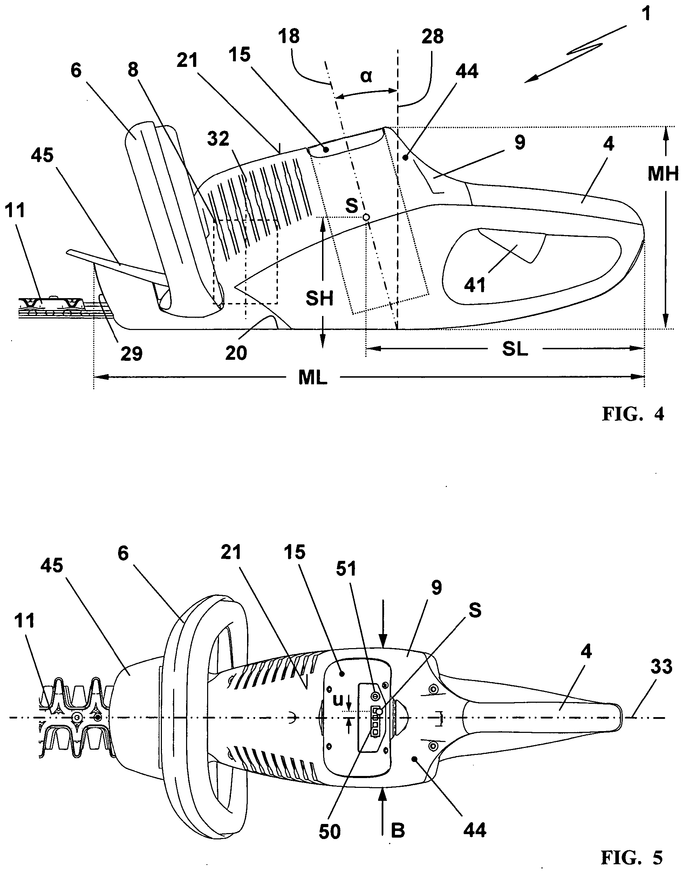

Das in den Zeichnungen nach den Figuren 1 bis 3 dargestellte Ausführungsbeispiel eines handgeführten Arbeitsgerätes 1 ist als Motorkettensäge 2 ausgeführt, die von einem Benutzer 3 getragen und geführt ist. Das erfindungsgemäße handgeführte Arbeitsgerät 1 kann auch eine Heckenschere sein, wie in den Figuren 4 und 5 dargestellt oder auch ein Trennschleifer, ein Freischneider, ein Kantenscheider, ein Hochentaster, ein Blasgerät, ein Sprühgerät, ein Sauggerät, ein Erdbohrgerät, ein Kombimotorgerät für multifunktionelle Vorsätze, ein Kehrgerät, eine Motorhacke, eine Bodenfräse, ein Hochdruckreiniger, ein Rasenmäher, ein Vertikutierer, ein Häcksler, ein Nass- oder Trockensauger oder dgl. Arbeitsgerät.

Der Benutzer 3 führt das in den Zeichnungen gezeigte Arbeitsgerät 1 mittels zwei Handgriffen, wobei ein erster, hinterer Handgriff 4 von einer ersten Hand 5 des Benutzers und ein zweiter, vorderer Handgriff 6 von einer zweiten Hand 7 des Benutzers 3 gegriffen ist. Bei dem dargestellten, handgeführten Arbeitsgerät handelt es sich somit um ein Zweihandgerät mit einem hinteren Handgriff 4 und einem vorderen Handgriff 6. Der hintere Handgriff 4 ist bevorzugt einteilig mit dem Gerätegehäuse 9 ausgebildet und besteht insbesondere aus zusammengefügten Griffschalen. Der vordere Handgriff 6 ist als Bügelgriff ausgeführt, der quer zur Gerätelängsachse 33 liegt. Der hintere Handgriff 4 liegt in Richtung der Gerätelängsachse 33 ausgerichtet.

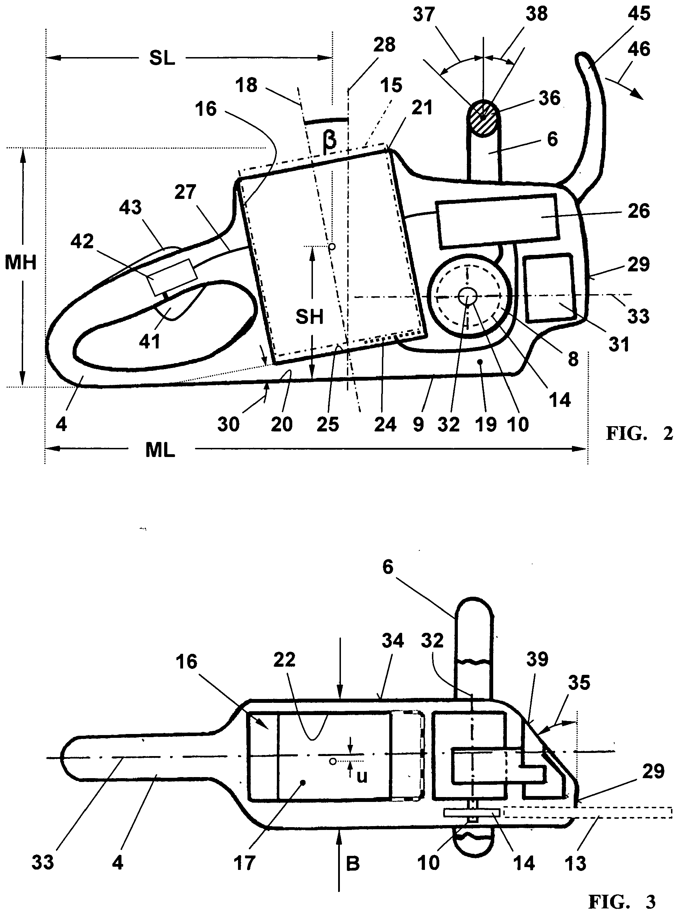

Das Gerätegehäuse 9 des Arbeitsgerätes 1 begrenzt ein Gerätevolumen 19; das Gerätevolumen 19 ist der Rauminhalt, welcher von den vorzugsweise aus Kunststoff bestehenden Gehäuseteilen des Gerätegehäuses 9 eingehüllt wird. Zum Gerätevolumen 19 wird nicht ein Schneid- bzw. Arbeitswerkzeug 11 des Arbeitsgerätes 1 gerechnet. Wie die Figuren 2 und 3 zeigen, ist im Gerätegehäuse 9 ein elektrischer Antriebsmotor 8 sowie ein Abtrieb 10 für das Arbeitswerkzeug 11 aufgenommen. Im Ausführungsbeispiel nach den Figuren 1 bis 3 ist das Arbeitswerkzeug 11 eine Sägekette 12, die in einer äußeren Umfangsnut einer Führungsschiene 13 umläuft. Die Sägekette 12 ist von einem Kettenritzel 14 angetrieben, die mit dem Abtrieb 10 - im Ausführungsbeispiel die Motorwelle - antriebsverbunden ist.

Das Gerätegehäuse 9 des Arbeitsgerätes 1 ist mit einem Akkupack 15 verbunden; im gezeigten Ausführungsbeispiel ist der Akkupack 15 in einem Aufnahmeschacht 16 aufgenommen und gehalten, der im Gerätegehäuse 9 ausgebildet ist. Der Aufnahmeschacht 16 hat ein Aufnahmevolumen 17, das im Wesentlichen dem Volumen des Akkupacks 15 entspricht, vorzugsweise geringfügig größer ist. Die Anordnung ist so getroffen, dass der Akkupack 15 - wie in Fig. 2 strichliert dargestellt - im Wesentlichen vollständig im Aufnahmeschacht 16 des Gerätegehäuses 9 aufgenommen ist. Der Akkupack hat dabei zweckmäßig ein Volumen von etwa 500 cm³ bis 1.200 cm³, insbesondere etwa 1.100 cm³.

Das Gehäusevolumen 19 steht zum Aufnahmevolumen 17 des Aufnahmeschachtes 16 in einem Verhältnis V; nach einem Kerngedanken der Erfindung ist das Verhältnis V des Gehäusevolumens 19 zum Aufnahmevolumen 17 in einem Bereich von etwa 1,5 bis maximal etwa 5. In besonderer Ausgestaltung ist das Verhältnis derart gewählt, dass es kleiner als 2,5 ist.

Wie sich aus Fig. 2 in Verbindung mit Fig. 3 ergibt, hat der Akkupack 15 eine etwa quaderförmige Gestalt, wobei er sich in seiner Längsachse 18 etwa über die gesamte Höhe H des Gerätegehäuses 9 erstreckt. Entsprechend erstreckt sich der Aufnahmeschacht 16 etwa vom Gehäuseboden 20 bis zum Gehäusedach 21 des Gerätegehäuses 9, wobei der Aufnahmeschacht 16 an seinem dem Gehäusedach 21 zugewandt liegenden Ende offen ist und eine Einstecköffnung 22 ausbildet, über die der Akkupack 15 in den Gehäuseschacht 16 und damit in das Gerätegehäuse 9 eingeschoben wird.

Der Akkupack 15 besteht aus einer Vielzahl von im Packgehäuse 23 angeordneten Einzelzellen z. B. Akkuzellen wie NiCd-Zellen (Nickel-Cadmium-Zellen), NiMh-Zellen (Nickel-Metallhydrid-Zellen), LiIo-Zellen (Lithium-Ionen-Zellen), LiPo-Zellen (Lithium-Polymer-Zellen), LiFePo4-Zellen (Lithium-Eisen-Phosphat-Zellen), Lithium-Titanat-Zellen oder dgl. Zellen mit geeignetem chemischen Aufbau. Die Zellenspannung einer einzelnen Zelle liegt im Bereich von 2 Volt bis 5 Volt, vorzugsweise etwa 3,6 Volt bis 3,7 Volt. Mit den verwendeten Zellen können je nach der ausgeführten Schaltung (Reihenschaltung, Parallelschaltung) Akkupackspannungen von 12 Volt bis 80 Volt, vorzugsweise 25 Volt bis 51 Volt bereitgestellt werden.

Der im Packgehäuse 23 verdrahtete Zellenblock wird über eine äußere Anschlussplatte 24 elektrisch kontaktiert, wobei die Anschlussplatte 24 am Boden 25 des Aufnahmeschachtes 16 vorgesehen ist. Die Anschlussplatte 24 liegt somit der Einstecköffnung 22 gegenüber, so dass beim Einschieben des Akkupacks 15 in Richtung seiner Längsachse 18 die elektrische Kontaktierung im Endabschnitt des Einschubweges erfolgt. Die Anschlussplatte 24 steht mit einer Steuerelektronik 26 in Verbindung, an die der elektrische Antriebsmotor 8 angeschlossen ist. Die Steuerelektronik 26 setzt die über eine Steuerleitung 27 empfangenen Steuerbefehle um, steuert den Antriebsmotor 8 entsprechend und versorgt ihn angepasst mit Strom aus dem Akkupack 15.

Der elektrische Antriebsmotor hat eine elektrische Aufnahmeleistung von mehr als 100 Watt, vorzugsweise im Bereich von 500 W bis 5.000 W und kann als EC-Motor bzw. Brushless-Motor oder DC-Motor bzw. bürstenloser Motor ausgebildet sein. Die Ansteuerung des Antriebsmotors erfolgt mittels der Steuerelektronik 26 mit Gleichstrom (DC), vorzugsweise einem pulsweitenmodulierten Gleichstrom. Die Steuerelektronik 26 des Arbeitsgerätes kann die Ansteuerelektronik für einen bürstenlosen EC-Motor umfassen.

Nach den konstruktiven Vorgaben des dargestellten Arbeitsgerätes 1 ist der Akkupack 15 im Gerätegehäuse 9 zwischen dem vorderen Handgriff 6 und dem hinteren Handgriff 4 platziert. Während der vordere Handgriff 6 als Anbauteil an das Gerätegehäuse 9 montiert ist, ist der hintere Handgriff 4 einteilig in das Gerätegehäuse 9 integriert. Dabei bildet nach der Definition das Volumen des hinteren Handgriffs 4 einen Teil des Gehäusevolumens.

Nach der Definition ist auch das Volumen 17 des Aufnahmeschachtes 16 Teil des Gehäusevolumens. Der Aufnahmeschacht 16 ist dabei zur Vertikalen auf den Gehäuseboden 20 des Gerätegehäuses 9 geneigt vorgesehen. Aufgrund dieser Neigung schließt die Bodenplatte 25 des Aufnahmeschachtes 16 mit dem Boden 20 des Gerätegehäuses 9 einen Winkel 30 ein, der im Bereich von etwa 4° bis 20° liegt. Der Winkel 30 öffnet zur vorderen Stirnseite 29 des Gerätegehäuses 9. Aufgrund dieser Gestaltung liegt die Längsachse 18 des Aufnahmeschachtes 16 bzw. des Akkupacks 15 zum hinteren Handgriff 4 geneigt, also nach hinten geneigt, und schließt mit der Vertikalen 28 auf den Boden 20 des Gerätegehäuses 9 einen Winkel β ein, der zwischen 4° und 20° liegt, insbesondere etwa 10° beträgt. Durch die Neigung des Akkupacks 15 kann der hintere Handgriff 4 näher an das Gerätegehäuse 9 angeschlossen werden, so dass sich eine kurze Baulänge L des Gerätegehäuses 9 ergibt. Wird der Akkupack 15 - wie in Figur 1 strichliert dargestellt - derart eingebaut, dass seine geringste Erstreckung in Richtung der Gerätelängsachse 33 liegt, kann die Baulänge weiter reduziert werden. Bei einer Motorkettensäge wird so ein kurzer Hebelarm geschaffen, wodurch die vom Benutzer aufgebrachte Vorschubkraft nicht zu groß werden kann und damit die Blockierneigung der Schneidgarnitur im Schnitt reduziert ist.

Der elektrische Antriebsmotor 8 mit dem Abtrieb 10 liegt bei dem erfindungsgemäßen Arbeitsgerät 1 zwischen dem Aufnahmeschacht 16 bzw. dem darin angeordneten Akkupack 15 und der vorderen Stirnseite 29 des Gerätegehäuses 9. Vorteilhaft liegt der Antriebsmotor 8 etwa unterhalb des vorderen Handgriffs 6, wobei die Steuerelektronik 26 für den Antriebsmotor 8 ebenfalls im Bereich des vorderen Handgriffs 6 im Gerätegehäuse 9 aufgenommen ist. Im Ausführungsbeispiel nach den Fig. 1 bis 3 ist ferner ein Schmiermitteltank 31 für Kettenöl vorgesehen, welches in die Umfangsnut der Führungsschiene 13 gefördert wird, um die Reibung zwischen der auf der Führungsschiene umlaufenden Sägekette 12 und der Führungsschiene 13 zu senken.

Die Drehachse 32 des Antriebsmotors 8 liegt quer zur Gerätelängsachse 33, wobei der Antriebsmotor 8 mit liegender Drehachse 32 wie in Fig. 3 montiert sein kann (Motorsäge) oder auch - wie in den Fig. 4 und 5 gezeigt, mit relativ zum Boden 20 des Gerätegehäuses 9 stehender Drehachse 32 (Heckenschere). In beiden Fällen liegt die Drehachse 32 des Antriebsmotors 8 quer zur Gerätelängsachse 33, insbesondere mit einem Winkel von 90° zur Gerätelängsachse 33.

Wie in den Ausführungsbeispielen gezeigt, liegt der Antriebsmotor 8 etwa unterhalb des oberen Griffabschnitts 36 des vorderen Handgriffs 6, der als sogenannter Bügelgriff ausgebildet ist. Dies bedeutet, dass der vordere Handgriff 6 mit einem Ende im Bereich des Gehäusebodens 20 festgelegt ist, sich über eine Längsseite und quer zur Gerätelängsachse 33 über das Gehäusedach 21 des Gerätegehäuses 9 erstreckt, um mit Abstand zur anderen Längsseite 34 wieder im Bereich des Bodens 20 des Gerätegehäuses 9 festgelegt zu werden.

Vor dem vorderen Handgriff 6 ist ein Handschutz 45 angeordnet, der bei einer Motorkettensäge 2 in an sich bekannter Weise als Auslöser für eine Sicherheitsbremse dienen kann. Bei Auslösen der Sicherheitsbremse durch Verschwenken des Handschutzes in Pfeilrichtung 46 (Fig. 2) wird das Kettenrad 14 über eine entsprechend ausgelegte Bremseinrichtung gestoppt, so dass die Sägekette 12 bei ausgelöster Sicherheitsbremseinrichtung in Sekundenbruchteilen zum Stillstand kommt.

Der Antriebsmotor 8, die Steuerelektronik 26 und - im Falle einer Motorkettensäge - der Schmiermitteltank 31 sind derart im Bereich des vorderen Handgriffes 6 im Gerätegehäuse 9 platziert, dass die vordere Stirnseite 29 über eine Schrägfläche 39 in die Längsseite 34 übergehen kann. Wie in Fig. 1 gezeigt, liegt die Schrägfläche 39 unter einem Winkel 35 zur Ebene der vorderen Stirnseite 29, wobei der Winkel in einem Bereich von etwa 10° bis 40°, insbesondere 30° liegt.

Durch Anordnung eines EC-Motors mit Außenläufer kann nicht nur eine hohe Leistung bereitgestellt werden, sondern auch die Baubreite B (Fig. 3) des Arbeitsgerätes 1 schmal gehalten werden. Die Baubreite B des Arbeitsgerätes 1 ist bevorzugt kleiner als 125 mm.

Die geringe Baubreite B und die kurze Baulänge ML führen in Verbindung mit der an der Stirnseite 29 angeordneten Schrägfläche 39 zu einer leicht zu handhabenden Maschine, die von einem Benutzer 3 einfach und zweckmäßig eingesetzt werden kann. Wie in Fig. 1 gezeigt, ist bei einer Motorkettensäge 2 aufgrund der Schrägfläche 39 ein nahes Arbeiten am Stamm 40 zum Entasten möglich, so dass die Arbeitslänge A der Führungsschiene 13 klein gehalten werden kann. Arbeitslängen der Führungsschiene zwischen 15 cm und 35 cm sind ausreichend.

Die Abmessungen des Arbeitsgerätes 1 (Fig. 1 bis 5) in Verbindung mit der Platzierung der Baugruppen (Antriebsmotor 8 mit Abtrieb 10; Steuerelektronik 26, Akkupack 15) ergeben eine Balance des Arbeitsgerätes derart, dass beim Halten der Maschine am oberen Griffabschnitt 36 die Gerätelängsachse 33 zur Horizontalen um einen Winkel 37 von etwa -30° oder einen Winkel 38 von etwa +15° verschwenkt. Trotz eines gewichtsprägenden Akkupacks 15 ist aufgrund dessen Anordnung sowie der Anordnung der anderen Baugruppen eine Balance geschaffen, die ein bequemes Tragen des Arbeitsgerätes am oberen Griffabschnitt 36 des vorderen Handgriffes 6 ermöglicht. Es ergibt sich ein Balancebereich von etwa 45°.

Zur Inbetriebnahme des handgeführten Arbeitsgerätes greift der Benutzer die Handgriffe 4 und 6, wie in Fig. 1 dargestellt. Mit der hinteren Hand 5 wird ein Schalthebel 41 betätigt, der auf ein elektrisches Stellglied 42 wie einen Mikroschalter oder dgl. wirkt. Der Mikroschalter 42 ist über die Steuerleitung 27 mit der Steuerelektronik 26 verbunden.

Es kann zweckmäßig sein, den Schalthebel 41 über eine Schalthebelsperre 43 zu blockieren (Fig. 2), die auf der dem Schalthebel 41 gegenüberliegenden Seite des Handgriffs 4 angeordnet ist. Beim Greifen des hinteren Handgriffs 4 wird der Benutzer 3 mit der Handinnenfläche die Schalthebelsperre 43 niederdrücken, so dass der Schalthebel 41 durch die Finger des Benutzers betätigt werden kann. Vorteilhaft ist der Schalthebel 41 nach Art eines Gashebels ausgebildet, d. h., je nach Stellung des Schalthebels 41 wird die Drehzahl des Antriebsmotors 8 über die Steuerelektronik 26 gesteuert.

Die über die Steuerleitung 27 an die Steuerelektronik 26 gegebenen Signale werden in dieser verarbeitet und entsprechend der Antriebsmotor 8 betrieben. Dies erfolgt zweckmäßig über ein getaktetes Gleichspannungssignal, dessen Signalbreite veränderlich ist.

Das in den Fig. 4 und 5 gezeigte Arbeitsgerät 1 ist eine Heckenschere 44, deren schematischer Aufbau dem des Arbeitsgerätes 1 nach den Fig. 1 bis 3 entspricht. Gleiche Teile sind daher mit gleichen Bezugszeichen versehen.

Als Arbeitswerkzeug 11 ist am Gerätegehäuse 9 ein Messerbalken befestigt, dessen Schermesser über ein Getriebe vom Antriebsmotor 8 hin- und hergehend angetrieben sind. Vom hinteren Ende des hinteren Handgriffs 4 bis zur vorderen Stirnseite 29 - also ohne Arbeitswerkzeug 11 - haben die Heckenschere 44 sowie die Motorkettensäge 2 nach den Fig. 1 bis 3 eine Gesamtlänge ML, die im Bereich von 350 mm bis 500 mm, insbesondere 390 mm bis 470 mm liegt. Die Gehäusebreite B der gezeigten Arbeitsgeräte 1 liegt im Bereich von 120 mm bis 180 mm, vorzugsweise im Bereich von 135 mm bis 150 mm.

Der Schwerpunkt S des in das Gerätegehäuse 9 eingeschobenen Akkupacks 15 hat eine Höhenlage mit einem Abstand SH über dem Gehäuseboden 25 im Bereich von etwa 80 mm bis 110 mm, vorzugsweise 90 mm bis 100 mm. Im Ausführungsbeispiel nach Fig. 2 beträgt der Abstand SH etwa 98 mm, im Ausführungsbeispiel nach Fig. 4 etwa 93 mm.

Die Anordnung des Akkupacks 15 im Gerätegehäuse ist so getroffen, dass die von dem hinteren Ende des hinteren Handgriffs 4 zu der vorderen Gerätestirnseite 29 gemessene Gerätelänge ML des Arbeitsgerätes 1 und der Abstand SL des Masseschwerpunktes S des Akkupacks 15 von dem hinteren Ende des hinteren Handgriffs 4 in einem Verhältnis ML/SL von etwa 1,7 bis 2,8 stehen, insbesondere etwa 2 ist. Die vom Boden 20 des Arbeitsgerätes 1 gemessene Gehäusehöhe MH des Gerätegehäuses 9 und der Abstand SH des Masseschwerpunktes S des Akkupacks 15 von dem Boden 20 stehen in einem Verhältnis MH/SH von etwa 1,5 bis 2,5, insbesondere ist es etwa 1,8. In der seitlichen Lage nach der Draufsicht entsprechend Fig. 3 oder 5 liegt der Masseschwerpunkt S des Akkupacks 15 mit einem vorzugsweise geringen seitlichen Abstand u zu der durch den hinteren Handgriff 4 verlaufenden Gerätelängsachse 33.

Wie Fig. 4 zeigt, liegt der Akkupack 15 relativ zu einer Vertikalen 28 auf den Boden 25 des Gerätegehäuses 9 nach vorne geneigt. Der Winkel α zwischen der Längsachse 18 des Akkupacks 15 und der Vertikalen 18 liegt im Bereich von 2° bis 20°; insbesondere beträgt der Winkel α etwa 15°.

Wie in Draufsicht auf den Akkupack nach Fig. 5 zu erkennen, sind in der im Gehäusedach 21 des Gerätegehäuses 9 liegenden Stirnseite des Akkupacks Anzeigeelemente 50 zur Visualisierung einer Akkuzustandsanzeige o. dgl. vorgesehen. Über ein in der Stirnseite angeordnetes Betätigungselement 51 können Betriebsdaten des Akkupacks 15 abgerufen oder Prüfzyklen initiiert werden.

## Patentansprüche

1. Handgeführtes Arbeitsgerät, insbesondere tragbares, handgeführtes Arbeitsgerät wie eine Heckenschere, eine Motorkettensäge, ein Freischneider oder dgl., mit einem Gerätegehäuse (9), das einen Boden (20) aufweist, wobei das Gerätegehäuse (9) ein Gehäusevolumen (19) und ein Aufnahmeschacht (16) ein im Gerätegehäuse (9) liegendes Aufnahmevolumen (17) aufweist, und das Gerätegehäuse (9) einen vorderen Handgriff (6) zum Führen des Arbeitsgerätes (1) aufweist, wobei der vordere Handgriff (6) einen oberen Griffabschnitt (36) aufweist, und dass das Arbeitsgerät (1) eine Gerätelängsachse (33) und eine vom Boden (20) des Arbeitsgerätes (1) gemessene Gehäusehöhe (MH) aufweist, wobei in dem Gerätegehäuse (9) ein elektrischer Antriebsmotor (8) und ein Abtrieb (10) für ein Arbeitswerkzeug (11) aufgenommen sind, und der Akkupack (15) über den Aufnahmeschacht (16) in das Gerätegehäuse (9) eingeschoben und mit dem Gerätegehäuse (9) verbunden ist, wobei der Akkupack (15) einen Masseschwerpunkt (S) aufweist, und der Masseschwerpunkt (S) des Akkupacks (15) von dem Boden (20) des Gerätegehäuses (9) einen Abstand (SH) aufweist,
**dadurch gekennzeichnet, dass** ein Verhältnis (V) des Gehäusevolumens (19) zum Aufnahmevolumen (17) im Bereich von 1,5 bis maximal 2,5 liegt, wobei der Akkupack (15) im Wesentlichen vollständig im Aufnahmeschacht (16) des Gerätegehäuses (9) aufgenommen ist, und die Gehäusehöhe (MH) des Arbeitsgerätes (1) und der Abstand (SH) des Masseschwerpunkts (S) des Akkupacks (15) von dem Boden (20) des Gerätegehäuses (9) in einem Verhältnis MH/SH von 1,5 bis kleiner 2,5 stehen, wobei der elektrische Antriebsmotor (8) zwischen dem Boden (20) des Gerätegehäuses (9) und dem oberen Griffabschnitt (36) des vorderen Handgriffs (6) derart angeordnet ist, dass der elektrische Antriebsmotor (8) unterhalb des oberen Griffabschnittes (36) des vorderen Handgriffs (6) liegt, wobei die Drehachse (32) des elektrischen Antriebsmotors (8) horizontal und quer zur Gerätelängsachse (33) liegt, und die Drehachse (32) des elektrischen Antriebsmotors (8) einen Winkel von 90° mit der Gerätelängsachse (33) einschließt.

2. Arbeitsgerät nach Anspruch 1,
**dadurch gekennzeichnet, dass** die von einem hinteren Handgriff (4) zu einer vorderen Gerätestirnseite (29) gemessene Gerätelänge (ML) des Arbeitsgerätes (1) und der Abstand (SL) des Masseschwerpunktes (S) des Akkupacks (15) von dem hinteren Handgriff (4) in einem Verhältnis ML/SL von 1,7 bis 2,8 stehen.

3. Arbeitsgerät nach Anspruch 1,
**dadurch gekennzeichnet, dass** der Masseschwerpunkt (S) des Akkupacks (15) mit einem geringen seitlichen Abstand (u) zu der Gerätelängsachse (33) liegt.

4. Arbeitsgerät nach Anspruch 1,
**dadurch gekennzeichnet, dass** der Akkupack (15) ein Volumen von etwa 500 cm³ bis 1.200 cm³ hat.

5. Arbeitsgerät nach Anspruch 1,
**dadurch gekennzeichnet, dass** der Akkupack (15) eine Nennspannung von 12 Volt bis 80 Volt hat.

6. Arbeitsgerät nach Anspruch 5,
**dadurch gekennzeichnet, dass** der Akkupack (15) eine Nennspannung von 25 Volt bis 51 Volt hat.

7. Arbeitsgerät nach einem der Ansprüche 1 bis 6,
**dadurch gekennzeichnet, dass** das Aufnahmevolumen (17) des Aufnahmeschachtes (16) Teil des Gehäusevolumens (19) ist.

8. Arbeitsgerät nach einem der Ansprüche 1 bis 7,
**dadurch gekennzeichnet, dass** ein hinterer Handgriff (4) des Gerätegehäuses (9) Teil des Gehäusevolumens (19) ist.

9. Arbeitsgerät nach einem der Ansprüche 1 bis 8,
**dadurch gekennzeichnet, dass** der Akkupack (15) eine etwa quaderförmige Geometrie hat und sich in seiner Längsachse (18) etwa über die gesamte Höhe (H) des Gerätegehäuses (9) erstreckt.

10. Arbeitsgerät nach einem der Ansprüche 1 bis 9,
**dadurch gekennzeichnet, dass** der Akkupack (15) im Gerätegehäuse (9) zwischen einem hinteren Handgriff (4) und einem vorderen Handgriff (6) des Arbeitsgerätes (1) liegt.

11. Arbeitsgerät nach einem der Ansprüche 1 bis 10,
**dadurch gekennzeichnet, dass** die Längsachse (18) des Aufnahmeschachtes (16) mit der Gerätelängsachse (33) einen Winkel kleiner als 90° einschließt.

12. Arbeitsgerät nach Anspruch 11,
**dadurch gekennzeichnet, dass** die Längsachse (18) des Aufnahmeschachtes (16) zur Vertikalen (28) auf den Boden (20) des Gerätegehäuses (9) nach vorne oder hinten um einen Winkel (α, β) im Bereich von 10° bis 15° geneigt liegt.

13. Arbeitsgerät nach einem der Ansprüche 1 bis 12,
**dadurch gekennzeichnet, dass** der Antriebsmotor (8) und der Abtrieb (10) im Bereich zwischen dem Aufnahmeschacht (16) bzw. einem darin angeordneten Akkupack (15) und der vorderen Stirnseite (29) des Gerätegehäuses (9) liegt.

14. Arbeitsgerät nach einem der Ansprüche 1 bis 13,
**dadurch gekennzeichnet, dass** der Antriebsmotor (8) ein EC-Motor bzw. Brushless-Motor mit einer Steuerelektronik (26) ist und die Steuerelektronik (26) im Bereich des vorderen Handgriffs (6) im Gerätegehäuse (9) angeordnet ist.

15. Arbeitsgerät nach einem der Ansprüche 1 bis 14,
**dadurch gekennzeichnet, dass** die vordere Stirnseite (29) des Arbeitsgerätes (1) eine Schrägfläche (39) aufweist, die mit der Gerätelängsachse (33) einen im Gerätegehäuse (9) liegenden inneren Winkel (35) von 10° bis 40° einschließt.

16. Arbeitsgerät nach einem der Ansprüche 1 bis 15,
**dadurch gekennzeichnet, dass** der Schwerpunkt des Arbeitsgerätes (1) mit dem Arbeitswerkzeug (11) im Bereich des vorderen Handgriffs (6) liegt, derart, dass beim Anheben des Arbeitsgerätes (1) am oberen Griffabschnitt (36) des vorderen Handgriffs (6) das Gerätegehäuse (9) in einen Balancebereich von +15° bis -30° um den Griffabschnitt (36) schwenkt.

## Claims

1. Handheld work apparatus, in particular a portable, handheld work apparatus, like a hedge trimmer, a motorised chain saw, a strimmer or similar, having an apparatus housing (9) which has a bottom (20), wherein the apparatus housing (9) has a housing volume (19), a receiving shaft (16) has a receiving volume (17) lying in the apparatus housing (9), and the apparatus housing (9) has a front hand grip (6) for guiding the work apparatus (1), wherein the front hand grip (6) has an upper grip portion (36), and the work apparatus (1) has an apparatus longitudinal axis (33) and a housing height (MII) measured from the bottom (20) of the work apparatus (1), wherein an electric driver motor (8) and an output (10) for a work tool (11) are received in the apparatus housing (9), and the battery pack (15) is inserted via the receiving shaft (16) into the apparatus housing (9) and connected to the apparatus housing (9), wherein the battery pack (15) has a centre of gravity (S), and the centre of gravity (S) of the battery pack (15) has a distance (SH) from the bottom (20) of the apparatus housing (9), **characterised in that** a ratio (V) of the housing volume (19) to the receiving volume (17) is in the range of from 1.5 to maximum 2.5, wherein the battery pack (15) is received substantially completely in the receiving shaft (16) of the apparatus housing (9), and the housing height (MH) of the work apparatus (1) and the distance (SH) of the centre of gravity (S) of the battery pack (15) from the bottom (20) of the apparatus housing (9) are in a ratio MH/SH of 1.5 to less than 2.5, wherein the electric drive motor (8) is arranged between the bottom (20) of the apparatus housing (9) and the upper grip portion (36) of the front hand grip (6) in such a way that the electric drive motor (8) lies below the upper grip portion (36) of the front hand grip (6), wherein the axis of rotation (32) of the electric drive motor (8) lies horizontally and transversely relative to the apparatus longitudinal axis (33), and the axis of rotation (32) of the electric drive motor (8) is at an angle of 90° with respect to the apparatus longitudinal axis (33).

2. Work apparatus according to claim 1,
**characterised in that** the apparatus length (ML) of the work apparatus (1) measured from a rear hand grip (4) to a front apparatus end face (29) and the distance (SL) of the centre of gravity (S) of the battery pack (15) from the rear hand grip (4) are in a ratio ML/SL of 1.7 to 2.8.

3. Work apparatus according to claim 1,
**characterised in that** the centre of gravity (S) of the battery pack (15) lies at a small lateral distance (u) from the apparatus longitudinal axis (33).

4. Work apparatus according to claim 1,
**characterised in that** the battery pack (15) has a volume of from approximately 500 cm³ to 1200 cm³.

5. Work apparatus according to claim 1,
**characterised in that** the battery pack (15) has a nominal voltage of from 12 Volt to 80 Volt.

6. Work apparatus according to claim 5,
**characterised in that** the battery pack (15) has a nominal voltage of from 25 Volt to 51 Volt.

7. Work apparatus according to one of claims 1 to 6,
**characterised in that** the receiving volume (17) of the receiving shaft (16) is part of the housing volume (19).

8. Work apparatus according to one of claims 1 to 7,
**characterised in that** a rear hand grip (4) of the apparatus housing (9) is part of the housing volume (19).

9. Work apparatus according to one of claims 1 to 8,
**characterised in that** the battery pack (15) has a prismatic geometry and extends in its longitudinal axis (18) over the whole height (H) of the apparatus housing (9).

10. Work apparatus according to one of claims 1 to 9,
**characterised in that** the battery pack (15) lies in the apparatus housing (9) between a rear hand grip (4) and a front hand grip (6) of the work apparatus (1).

11. Work apparatus according to one of claims 1 to 10,
**characterised in that** the longitudinal axis (18) of the receiving shaft (16) is at an angle of less than 90° relative to the apparatus longitudinal axis (33).

12. Work apparatus according to claim 11,
**characterised in that** the longitudinal axis (18) of the receiving shaft (16) is inclined relative to the vertical (28) to the bottom (20) of the apparatus housing (9) to the front or to the rear by an angle (α, β) in the range of from 10° to 15°.

13. Work apparatus according to one of claims 1 to 12,
**characterised in that** the drive motor (8) and the output (10) lie in the region between the receiving shaft (16) or a battery pack (15) arranged therein and the front end face (29) of the apparatus housing (9).

14. Work apparatus according to one of claims 1 to 13,
**characterised in that** the drive motor (8) is an EC motor or brushless motor with an electronic control unit (26) and the electronic control unit (26) is arranged in the region of the front hand grip (6) in the apparatus housing (9).

15. Work apparatus according to one of claims 1 to 14,
**characterised in that** the front end face (29) of the work apparatus (1) has an inclined area (39), which is at an internal angle (35) in the apparatus housing (9) of from 10° to 40° inclusive relative to the apparatus longitudinal axis (33).

16. Work apparatus according to one of claims 1 to 15,
**characterised in that** the centre of gravity of the work apparatus (1) with the work tool (11) is in the region of the front hand grip (6) in such a way that, when the work apparatus (1) is lifted at the upper grip portion (36) of the front hand grip (6), the apparatus housing (9) pivots around the grip portion (36) in a balance range of from +15° to -30°.

## Revendications

1. Equipement de travail tenu à la main, en particulier équipement de travail portatif tenu à la main tel qu'un taille-haie, une tronçonneuse à chaîne, une débroussailleuse, etc., avec un boîtier d'équipement (9) qui présente un fond (20), ledit boîtier (9) présentant un volume de boîtier (19) tandis qu'un logement (16) présente un volume de logement (17) situé dans le boîtier d'équipement (9), et le boîtier (9) comportant une poignée avant (6) pour guider l'équipement de travail (1), la poignée avant (6) comportant une section de poignée supérieure (36), et l'équipement de travail (1) présentant un axe longitudinal d'équipement (33) et une hauteur totale (MH) mesurée à partir du fond (20) de l'équipement de travail (1), un moteur d'entraînement électrique (8) et un dispositif de sortie (10) pour un outil de travail (11) étant logés dans le boîtier d'équipement (9), la batterie (15) étant glissée dans le boîtier (9) par le logement (16) et étant reliée audit boîtier (9), la batterie (15) présentant un centre de gravité (S), et le centre de gravité (S) de la batterie (15) présentant une distance (SH) par rapport au fond (20) du boîtier (9),
**caractérisé en ce qu'**un rapport (V) du volume de boîtier (19) sur le volume de logement (17) est situé dans la plage de 1,5 à 2,5 au maximum, la batterie (15) étant logée quasi entièrement dans le logement (16) du boîtier (9), et la hauteur totale (MH) de l'équipement de travail (1) et la distance (SH) entre le centre de gravité (S) de la batterie (15) et le fond (20) du boîtier (9) représentant un rapport MS/SH de 1,5 à moins de 2,5, le moteur d'entraînement électrique (8) étant disposé entre le fond (20) du boîtier (9) et la section de poignée supérieure (36) de la poignée avant (6) de manière à se trouver au-dessous de ladite section supérieure (36) de la poignée avant (6), l'axe de rotation (32) du moteur d'entraînement électrique (8) étant placé horizontalement et transversalement par rapport à l'axe longitudinal d'équipement (33), et l'axe de rotation (32) du moteur d'entraînement électrique (8) définissant un angle de 90° avec l'axe longitudinal d'équipement (33).

2. Equipement de travail selon la revendication 1,
**caractérisé en ce que** la longueur d'équipement (ML) de l'équipement de travail (1), mesurée d'une poignée arrière (4) jusqu'à un côté frontal avant d'équipement (29), et la distance (SL) entre le centre de gravité (S) de la batterie (15) et la poignée arrière (4) représentent un rapport ML/SL de 1,7 à 2,8.

3. Equipement de travail selon la revendication 1,
**caractérisé en ce que** le centre de gravité (S) de la batterie (15) se trouve à une faible distance latérale (u) de l'axe longitudinal d'équipement (33).

4. Equipement de travail selon la revendication 1,
**caractérisé en ce que** la batterie (15) a un volume d'environ 500 cm³ à 1200 cm³.

5. Equipement de travail selon la revendication 1,
**caractérisé en ce que** la batterie (15) a une tension nominale de 12 volts à 80 volts.

6. Equipement de travail selon la revendication 5,
**caractérisé en ce que** la batterie (15) a une tension nominale de 24 volts à 51 volts.

7. Equipement de travail selon l'une des revendications 1 à 6,
**caractérisé en ce que** le volume de logement (17) du logement (16) fait partie du volume de boîtier (19).

8. Equipement de travail selon l'une des revendications 1 à 7,
**caractérisé en ce qu'**une poignée arrière (4) du boîtier d'équipement (9) fait partie du volume de boîtier (19).

9. Equipement de travail selon l'une des revendications 1 à 8,
**caractérisé en ce que** la batterie (15) a une géométrie à peu près parallélipipédique et s'étend avec son axe longitudinal (18) à peu près sur toute la hauteur (H) du boîtier d'équipement (9).

10. Equipement de travail selon l'une des revendications 1 à 9,
**caractérisé en ce que** la batterie (15) se trouve dans le boîtier d'équipement (9) entre une poignée arrière (4) et une poignée avant (6) de l'équipement de travail (1).

11. Equipement de travail selon l'une des revendications 1 à 10,
**caractérisé en ce que** l'axe longitudinal (18) du logement (16) définit avec l'axe longitudinal d'équipement (33) un angle inférieur à 90°.

12. Equipement de travail selon la revendication 11,
**caractérisé en ce que** l'axe longitudinal (18) du logement (16) est incliné par rapport à la verticale (28) au fond (20) du boîtier d'équipement (9), vers l'avant ou l'arrière, suivant un angle (α, β) situé dans la plage de 10° à 15°.

13. Equipement de travail selon l'une des revendications 1 à 12,
**caractérisé en ce que** le moteur d'entraînement (8) et le dispositif de sortie (10) se trouvent dans la zone entre le logement (16) ou une batterie (15) disposée dans celui-ci, et le côté frontal avant (29) du boîtier d'équipement (9).

14. Equipement de travail selon l'une des revendications 1 à 13,
**caractérisé en ce que** le moteur d'entraînement (8) est un moteur à commutation électronique ou un moteur sans balais pourvu d'une électronique de commande (26), et l'électronique de commande (26) est disposée dans le boîtier d'équipement (9) dans la zone de la poignée avant (6).

15. Equipement de travail selon l'une des revendications 1 à 14,
**caractérisé en ce que** le côté frontal avant (29) de l'équipement de travail (1) présente une surface inclinée (39) qui définit avec l'axe longitudinal d'équipement (33) un angle intérieur (35) situé dans le boîtier d'équipement (9), de 10° à 40°.

16. Equipement de travail selon l'une des revendications 1 à 15,
**caractérisé en ce que** le centre de gravité de l'équipement de travail (1) avec l'outil de travail (11) se trouve dans la zone de la poignée avant (6), de telle sorte que lors du soulèvement de l'équipement de travail (1) au niveau de la section de poignée supérieure (36) de la poignée avant (6), le boîtier d'équipement (9) pivote sur ladite section de poignée (36) dans une zone d'équilibre de +15° à -30°.
